# EUROPÄISCHE PATENTSCHRIFT

(11) **EP 4 359 228 B1**
(45) Veröffentlichungstag und Bekanntmachung des Hinweises auf die Patenterteilung: **12.03.2025**
(21) Anmeldenummer: 21830385.7
(22) Anmeldetag: 07.12.2021
(51) Int. Cl.: B60C 9/02

(54) **FAHRZEUGLUFTREIFEN AUFWEISEND EINE KARKASSLAGE**
TIRE COMPRISING A CARCASS
PNEU COMPRENANT UNE CARCASSE

(30) Priorität: 25.06.2021 DE 102021206626
(43) Veröffentlichungstag der Anmeldung: 01.05.2024
(73) Patentinhaber: Continental Reifen Deutschland GmbH, 30175 Hannover (DE)
(72) Erfinder: BIABANAKI, Seyedomidreza, 30165 Hannover (DE); FRIES, Volkmar, 30165 Hannover (DE); LEHN, Michael, 30165 Hannover (DE); VON ZOBELTITZ, Carsten, 30165 Hannover (DE); ZHENG, Dong, 30165 Hannover (DE)
(74) Vertreter: Continental Corporation
(86) Internationale Anmeldenummer: PCT/DE2021/200245
(87) Internationale Veröffentlichungsnummer: WO 2022/268240

(56) Entgegenhaltungen:
- GB-A- 2 070 526
- US-A1- 2019 241 019

## Beschreibung

Die Erfindung betrifft einen Fahrzeugluftreifen, insbesondere Nutzfahrzeugreifen, aufweisend einen Laufstreifen mit einer Lauffläche und einer schulterseitigen über den Umfang des Reifens umlaufenden Umfangsrille sowie aufweisend eine Karkasse mit einer Festigkeitsträger aufweisenden Karkasslage, wobei die Karkasslage in einem Querschnitt des Reifens eine durch die Mittelpunkte der Festigkeitsträger der Karkasslage verlaufende Karkasslagenlinie aufweist, wobei es sich um den Querschnitt senkrecht zur Umfangsrichtung U handelt, den der Reifen im Neuzustand aufweisen würde, wenn er auf einer Normfelge gemäß E.T.R.T.O. ohne Fülldruck montiert wäre.

Ein Fahrzeugluftreifen weist im Allgemeinen eine luftundurchlässige Innenschicht, eine insbesondere radiale Karkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf.

Ein auf einer Felge montierter Fahrzeugluftreifen erfährt eine Änderung in seiner Außenkontur, wenn ausgehend von einem Zustand ohne Fülldruck (d.h. bei atmosphärischem Druck) der Fülldruck des Reifens bis auf den für den Betrieb des Reifens vorgesehenen Fülldruck erhöht wird. Fahrzeugluftreifen, deren Karkasslage am ohne Fülldruck montierten Reifen wie üblich weitgehend geradlinig von einer axialen Mitte des Reifens bis in die Schulterbereiche geführt ist, erfahren dabei gerade im Schulterbereich ein stärkeres Wachstum nach radial außen als in der axialen Mitte des Reifens. Dies kann zu einer Öffnung der Umfangsrille sowie zu tangentialer Spannung im Rillengrund führen, was im Betrieb des Reifens zu Ermüdungsrissen in der Umfangsrille führen kann.

Um ein gleichmäßigeres Wachstum bei Befüllung des Fahrzeugluftreifens zu ermöglichen, ist es aus der EP 3212441 A1 bekannt, die Anordnung der Karkasslage zu optimieren.

Reifen aufweisend eine Karkasslinie sind in der US 2019/241019 A1 sowie der GB 2070526 A offenbart.

Der Fahrzeugluftreifen kann im Betrieb insbesondere während der ersten ca. 1000 km durch zyklische Deformation des Reifens ein weiteres Wachstum insbesondere im Schulterbereich erfahren.

Auch dieses Wachstum im Schulterbereich kann im weiteren Betrieb des Reifens zu Ermüdungsrissen der Umfangsrillen führen.

Aufgabe ist es daher, einen Fahrzeugluftreifen zur Verfügung zu stellen, der eine verbesserte Ermüdungsbeständigkeit der Umfangsrille aufweist.

Dies wird dadurch erreicht, dass ein Punkt R der Karkasslagenlinie, welcher durch eine Projektion einer Mitte der Umfangsrille senkrecht auf die Karkasslagenlinie gegeben ist, einen ersten Abstand d von mindestens 0,7 mm zu einer zwei Punkte A und B der Karkasslagenlinie verbindenden Geraden aufweist, wobei die Mitte der Umfangsrille bestimmt ist in einer von radial außen auf der Lauffläche aufliegenden Mantelfläche, wobei der erste Abstand d gemessen ist senkrecht zur Geraden und wobei der Punkt R radial außerhalb der Geraden angeordnet ist und wobei der Punkt R entlang der Karkasslagenlinie gemessen mittig zwischen den Punkten A und B angeordnet ist und zu jedem der beiden Punkte A und B einen gleichen zweiten Abstand D aufweist, wobei der zweite Abstand D 1,0 bis 2,0 mal eine Breite der Umfangsrille, gemessen entlang der Mantelfläche, beträgt.

Es hat sich gezeigt, dass die genannte lokale Spezifikation der Anordnung der Karkasslagenlinie radial innerhalb der Umfangsrille hervorragend dazu geeignet ist, dem Wachstum durch Steigern des Fülldrucks sowie durch zyklische Deformationen im Betrieb des Reifens, insbesondere des Nutzfahrzeugreifens, gezielt im Bereich der Umfangsrille entgegenzuwirken.

Durch die Befüllung des Reifens auf den für den Betrieb vorgesehenen Fülldruck sowie durch zyklische Belastung des Reifens im Betrieb erfährt die Karkasslage eine starke Zugbelastung, wodurch es zu einer Begradigung der Karkasslage sowie ihrer Karkasslagenlinie, und damit zu einer Reduktion der am unbefüllten Neureifen durch den ersten Abstand d von mindestens 0,7 mm beeinflussten Krümmung im Bereich des Punktes R der Karkasslagenlinie kommt. Diese Reduktion der Krümmung und Begradigung der Karkasslage wirkt dem Wachstum des Reifens im Bereich der Umfangsrille entgegen, so dass das gesamte Wachstum des Reifens in diesem Bereich vorteilhaft reduziert ist. Ein erster Abstand d von kleiner als 0,7 mm hingegen führt nur zu einer geringfügigen Beeinflussung des Reifenwachstums.

Wesentlich ist dabei, dass die spezifische Anordnung der Karkasslagenlinie auf die Position der Umfangsrille sowie auf deren Geometrie abgestimmt ist. Die Position der Umfangsrille fließt dabei über den Referenzpunkt R in die Anordnung der Karkasslagenlinie ein. Die Geometrie der Umfangsrille, insbesondere die Breite der Umfangsrille, fließt dabei über den zweiten Abstand D der beiden Punkte A und B von dem Punkt R in die Anordnung der Karkasslagenlinie ein. Der Punkt R ist dabei, gemessen entlang der Karkasslagenlinie, mittig zwischen den Punkten A und B angeordnet und weist zu jedem der beiden Punkte A und B einen gleichen zweiten Abstand D auf. Der zweite Abstand D beträgt erfindungsgemäß 1,0 bis 2,0 mal die Breite der Umfangsrille, gemessen entlang der Mantelfläche. Die Breite der Umfangsrille kann 10,0 mm bis 20,0 mm betragen. Hierdurch ist das Wachstum des Reifens speziell im Bereich der Umfangsrille auf die Anordnung und Geometrie der Umfangsrille abgestimmt und optimiert. Eine Öffnung der Umfangsrille sowie tangentiale Spannungen am Rillengrund der Umfangsrille sind somit reduziert. Hierdurch ist die Bildung von Ermüdungsrissen der Umfangsrille verringert.

Die Stärke der Reduktion des Wachstums im Bereich der Umfangsrille ist durch die Wahl des ersten Abstandes d beeinflussbar. Es hat sich gezeigt, dass ab einem Wert von d = 0,7 mm das Wachstum derart reduziert ist, dass die Ermüdungsbeständigkeit der Umfangsrille deutlich verbessert ist.

Somit ist ein Fahrzeugluftreifen, insbesondere ein Nutzfahrzeugreifen, zur Verfügung gestellt, der eine verbesserte Ermüdungsbeständigkeit der Umfangsrille aufweist.

Eine vorteilhafte Ausführungsform ist dadurch gegeben, dass der erste Abstand d 0,7 mm bis 5,0 mm beträgt.

Es hat sich gezeigt, dass ein derartiger erster Abstand d ein besonders geringes Wachstum im Schulterbereich ermöglicht. Hierdurch ist eine besonders geringe Öffnung der Umfangsrille ermöglicht und die Ermüdungsbeständigkeit der Umfangsrille weiter verbessert. Ein erster Abstand d von mehr als 5,0 mm kann, abhängig von der Reifengröße und Reifenkontur, zu einer für die Reifenaufstandsfläche und Reifenperformance nachteilige Änderung der Reifenbreite und der Schulterrippenkontur führen.

Eine vorteilhafte Ausführungsform ist dadurch gegeben, dass der zweite Abstand D 10 mm bis 40 mm beträgt.

Es hat sich gezeigt, dass durch einen derartigen zweiten Abstand D die Unterdrückung des Wachstums im Schulterbereich besonders gut auf die übliche Breite der schulterseitigen Rille optimierbar ist.

Eine vorteilhafte Ausführungsform ist dadurch gegeben, dass die Karkasslagenlinie im gesamten Bereich zwischen den Punkten A und B eine einem Reifeninnenraum zugewandte Krümmung aufweisend angeordnet ist.

Hierdurch kann dem Wachstum des Reifens im Bereich der Umfangsrille durch eine Begradigung der Karkasslage unter Zugspannung besonders effizient entgegengewirkt werden.

Eine vorteilhafte Ausführungsform ist dadurch gegeben, dass die Karkasslagenlinie axial innerhalb der Punkte A und B eine einem Reifenaußenraum zugewandte Krümmung aufweisend angeordnet ist.

Dies trägt zusätzlich dazu bei, dass dem Wachstum des Reifens im Bereich der Umfangsrille durch eine Begradigung der Karkasslage unter Zugspannung besonders effizient entgegengewirkt wird.

Eine vorteilhafte Ausführungsform ist dadurch gegeben, dass beide axialen Hälften des Reifens derart ausgebildet sind.

Somit kann die Ermüdungsbeständigkeit der schulterseitigen Umfangsrillen in beiden Hälften des Reifens verbessert werden.

Eine vorteilhafte Ausführungsform ist dadurch gegeben, dass die Festigkeitsträger der Karkasslage in einer Seitenwand des Reifens einen Winkel von maximal 10°, bevorzugt von maximal 5°, besonders bevorzugt von maximal 3°, mit der radialen Richtung rR einschließen.

Das beschriebene nachteilige Wachstum zeigt sich insbesondere bei Reifen aufweisend eine Karkasslage, deren Festigkeitsträger in der Seitenwand einen Winkel von maximal 10°, bevorzugt von maximal 5°, besonders bevorzugt von maximal 3°, mit der radialen Richtung einschließen. Die Vorteile der Erfindung kommen somit bei einem Reifen mit einem derartigen Winkel der Karkassfestigkeitsträger, insbesondere bei einem Reifen mit einer radialen Karkasse, besonders zum Tragen.

Eine vorteilhafte Ausführungsform ist dadurch gegeben, dass die Umfangsrille diejenige axial äußerste Umfangsrille ist, die einen dritten Abstand von mindestens 20 mm von einer Laufflächenkante aufweist, gemessen entlang der axialen Richtung aR.

Die Umfangsrille kann somit eine sogenannte Schulterrille sein. Die Veränderung der Karkasse durch die Befüllung erhöht sich in der Regel nach axial außen. Auf Umfangsrillen, die einen geringeren dritten Abstand als 20 mm von der Laufflächenkante entfernt angeordnet sind, hat das Reifenwachstum jedoch nur einen nachrangigen negativen Effekt. Deshalb ist diese Art der Reifengestaltung für diejenige axial äußerste Umfangsrille, die einen dritten Abstand von mindestens 20 mm von der Laufflächenkante aufweist, besonders vorteilhaft. Eine Umfangsrille weist insbesondere eine Breite von 10,0 mm bis 20,0 mm auf.

Eine vorteilhafte Ausführungsform ist dadurch gegeben, dass der Reifen ein nominelles Querschnittsverhältnis von 45 % bis 80 % aufweist.

Das nominelle Querschnittsverhältnis (nominal aspect ratio) ist ermittelt gemäß E.T.R.T.O. Standard. Das nominelle Querschnittsverhältnis ist üblicherweise auf der Oberfläche der Reifenseitenwand angegeben.

Eine vorteilhafte Ausführungsform ist dadurch gegeben, dass der Reifen ein Nutzfahrzeugreifen, bevorzugt ein Lastwagenreifen, ist.

Wachstumsbedingte Ermüdungserscheinungen im Bereich der Umfangsrille können besonders bei Nutzfahrzeugreifen, insbesondere Lastwagenreifen, durch die erfindungsgemäße Ausgestaltung des Fahrzeugluftreifens verringert werden. Besonders vorteilhaft ist die Erfindung dabei für Nutzfahrzeugreifen, insbesondere Lastwagenreifen, mit einem nominellen Querschnittsverhältnis von 45 % bis 80 %.

Alle in dieser Beschreibung wiedergegebenen Ausführungsformen des erfindungsgemäßen Fahrzeugluftreifens stellen lediglich Beispiele der Ausgestaltung der Erfindung dar. Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird.

Weitere Merkmale, Vorteile und Einzelheiten der Erfindung werden nun anhand der schematischen Zeichnungen, die Ausführungsbeispiele darstellen, näher erläutert. Dabei zeigt die

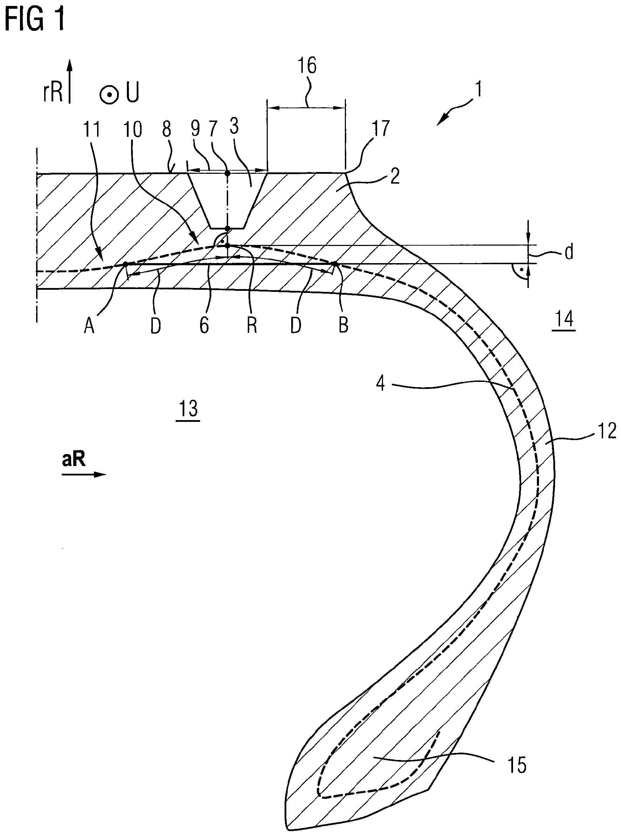

Fig. 1 einen Querschnitt eines Fahrzeugluftreifens gemäß der Erfindung;

Die Fig. 1 zeigt einen Querschnitt eines Fahrzeugluftreifens 1, insbesondere eines Nutzfahrzeugreifens, gemäß der Erfindung. Der Querschnitt ist genommen senkrecht zur Umfangsrichtung U. Der Querschnitt ist so ausgeführt, wie ihn der Reifen 1 im Neuzustand aufweisen würde, wenn der Reifen auf einer Normfelge gemäß E.T.R.T.O. ohne Fülldruck montiert wäre.

Die wesentlichen Bauteile, aus welchen sich der Fahrzeugluftreifen 1 zusammensetzt, sind eine weitgehend luftundurchlässige Innenschicht, eine eine Karkasslage aufweisende insbesondere radiale Karkasse, die in herkömmlicher Weise vom Zenitbereich des Fahrzeugluftreifens über Seitenwände 12 bis in Wulstbereiche reicht und dort durch Umschlingen zugfester Wulstkerne 15 verankert ist, einen radial außerhalb der Karkasse befindlichen profilierten Laufstreifen 2 und einen zwischen dem Laufstreifen 2 und der Karkasse angeordneten Gürtel.

Der Laufstreifen 2 weist eine Lauffläche und eine schulterseitige über den Umfang des Reifens umlaufende Umfangsrille 3 auf. Es kann sich um eine sogenannte Schulterrille handeln. Es kann sich bei der Umfangsrille 3 um diejenige axial äußerste Umfangsrille 3 handeln, die einen dritten Abstand 16 von mindestens 20 mm von einer Laufflächenkante 17 aufweist, gemessen entlang der axialen Richtung aR.

Die Karkasslage weist weitgehend parallel zueinander angeordnete Festigkeitsträger auf, welche in den Seitenwänden 12 des Reifens einen Winkel von maximal 10°, bevorzugt von maximal 5°, besonders bevorzugt von maximal 3°, mit der radialen Richtung rR einschließen. Die Karkasse kann als Radialkarkasse ausgebildet sein. Die Karkasslage 4 weist in dem Querschnitt des Reifens eine durch die Mittelpunkte der Festigkeitsträger der Karkasslage verlaufende Karkasslagenlinie 4 auf.

Der erfindungsgemäße Reifen zeichnet sich dadurch aus, dass in dem dargestellten Querschnitt ein Punkt R der Karkasslagenlinie 4, welcher durch eine senkrechte Projektion einer Mitte 7 der Umfangsrille 3 auf die Karkasslagenlinie 4 gegeben ist, einen ersten Abstand d von mindestens 0,7 mm zu einer zwei Punkte A und B der Karkasslagenlinie verbindenden Geraden 6 aufweist.

Dabei ist die Mitte 7 der Umfangsrille bestimmt in einer von radial außen auf der Lauffläche aufliegenden Mantelfläche 8. Der erste Abstand d ist gemessen senkrecht zur Geraden 6. Der Punkt R ist radial außerhalb der Geraden 6 angeordnet. Der Punkt R ist, gemessen entlang der Karkasslagenlinie 4, mittig zwischen den Punkten A und B angeordnet und weist zu jedem der beiden Punkte A und B einen gleichen zweiten Abstand D auf. Der zweite Abstand D beträgt 1,0 bis 2,0 mal eine Breite 9 der Umfangsrille 3, gemessen entlang der Mantelfläche 8.

Der erste Abstand d kann 0,7 mm bis 5,0 mm betragen. Der zweite Abstand D kann 10 mm bis 40 mm betragen. Die Breite 9 der Umfangsrille 3 kann 10,0 mm bis 20,0 mm betragen.

Wie dargestellt kann die Karkasslagenlinie 4 im gesamten Bereich zwischen den Punkten A und B eine einem Reifeninnenraum 13 zugewandte Krümmung 10 aufweisen. Die Karkasslagenlinie 4 axial innerhalb der Punkte A und B kann eine einem Reifenaußenraum 14 zugewandte Krümmung 11 aufweisend angeordnet sein.

Beide axialen Hälften des Reifens 1 können eine entsprechende Auslegung der Karkasslagenlinie 4 aufweisen.

Der Reifen kann ein nominelles Querschnittsverhältnis von 45 % bis 80 % aufweisen. Das nominelle Querschnittsverhältnis (nominal aspect ratio) ist ermittelt gemäß E.T.R.T.O. Standard. Das nominelle Querschnittsverhältnis ist üblicherweise auf der Oberfläche der Reifenseitenwand angegeben.

### Bezugszeichenliste

### (Teil der Beschreibung)

- 1: Fahrzeugluftreifen
- 2: Laufstreifen
- 3: Umfangsrille
- 4: Karkasslagenlinie
- 6: Gerade
- 7: Mitte der Umfangsrille
- 8: Mantelfläche
- 9: Breite der Umfangsrille
- 10: Krümmung
- 11: Krümmung
- 12: Seitenwand
- 13: Reifeninnenraum
- 14: Reifenaußenraum
- 15: Wulst
- 16: dritter Abstand
- 17: Laufflächenkante

- A, B: Punkte
- d: erster Abstand
- D: zweiter Abstand
- R: Punkt

- aR: axiale Richtung
- rR: radiale Richtung
- U: Umlaufrichtung

## Patentansprüche

1. Fahrzeugluftreifen (1), insbesondere Nutzfahrzeugreifen, aufweisend
• einen Laufstreifen (2) mit einer Lauffläche und einer schulterseitigen über den Umfang des Reifens umlaufenden Umfangsrille (3)
• sowie aufweisend eine Karkasse mit einer Festigkeitsträger aufweisenden Karkasslage, wobei die Karkasslage in einem Querschnitt des Reifens eine durch die Mittelpunkte der Festigkeitsträger der Karkasslage verlaufende Karkasslagenlinie (4) aufweist, wobei es sich um den Querschnitt senkrecht zur Umfangsrichtung U handelt, den der Reifen (1) im Neuzustand aufweisen würde, wenn er auf einer Normfelge gemäß E.T.R.T.O. ohne Fülldruck montiert wäre, **dadurch gekennzeichnet,**
• **dass** ein Punkt R der Karkasslagenlinie (4), welcher durch eine Projektion einer Mitte (7) der Umfangsrille (3) senkrecht auf die Karkasslagenlinie (4) gegeben ist, einen ersten Abstand d von mindestens 0,7 mm zu einer zwei Punkte A und B der Karkasslagenlinie verbindenden Geraden (6) aufweist,
∘ wobei die Mitte (7) der Umfangsrille bestimmt ist in einer von radial außen auf der Lauffläche aufliegenden Mantelfläche (8),
∘ wobei der erste Abstand d gemessen ist senkrecht zur Geraden (6) und wobei der Punkt R radial außerhalb der Geraden (6) angeordnet ist und
∘ wobei der Punkt R entlang der Karkasslagenlinie (4) gemessen mittig zwischen den Punkten A und B angeordnet ist und zu jedem der beiden Punkte A und B einen gleichen zweiten Abstand D aufweist, wobei der zweite Abstand D 1,0 bis 2,0 mal eine Breite (9) der Umfangsrille (3), gemessen entlang der Mantelfläche (8), beträgt.

2. Fahrzeugluftreifen (1) gemäß Anspruch 1, **dadurch gekennzeichnet, dass** der erste Abstand d 0,7 mm bis 5,0 mm beträgt.

3. Fahrzeugluftreifen (1) gemäß zumindest einem der vorhergehenden Ansprüche, **dadurch gekennzeichnet, dass** der zweite Abstand D 10 mm bis 40 mm beträgt.

4. Fahrzeugluftreifen (1) gemäß zumindest einem der vorhergehenden Ansprüche, **dadurch gekennzeichnet, dass** die Karkasslagenlinie (4) im gesamten Bereich zwischen den Punkten A und B eine einem Reifeninnenraum (13) zugewandte Krümmung (10) aufweisend angeordnet ist.

5. Fahrzeugluftreifen (1) gemäß zumindest einem der vorhergehenden Ansprüche, **dadurch gekennzeichnet, dass** die Karkasslagenlinie (4) axial innerhalb der Punkte A und B eine einem Reifenaußenraum (14) zugewandte Krümmung (11) aufweisend angeordnet ist.

6. Fahrzeugluftreifen (1) gemäß zumindest einem der vorhergehenden Ansprüche, **dadurch gekennzeichnet, dass** beide axialen Hälften des Reifens derart ausgebildet sind.

7. Fahrzeugluftreifen (1) gemäß zumindest einem der vorhergehenden Ansprüche, **dadurch gekennzeichnet, dass** die Festigkeitsträger der Karkasslage (4) in einer Seitenwand des Reifens einen Winkel von maximal 10°, bevorzugt von maximal 5°, besonders bevorzugt von maximal 3°, mit der radialen Richtung rR einschließen.

8. Fahrzeugluftreifen (1) gemäß zumindest einem der vorhergehenden Ansprüche, **dadurch gekennzeichnet, dass** die Umfangsrille (3) diejenige axial äußerste Umfangsrille ist, die einen dritten Abstand von mindestens 20 mm von einer Laufflächenkante aufweist, gemessen entlang der axialen Richtung aR.

9. Fahrzeugluftreifen (1) gemäß zumindest einem der vorhergehenden Ansprüche, **dadurch gekennzeichnet, dass** der Reifen ein nominelles Querschnittsverhältnis von 45 % bis 80 % aufweist.

10. Fahrzeugluftreifen (1) gemäß zumindest einem der vorhergehenden Ansprüche, **dadurch gekennzeichnet, dass** der Reifen ein Nutzfahrzeugreifen, bevorzugt ein Lastwagenreifen, ist.

## Claims

1. Pneumatic vehicle tyre (1), in particular a utility vehicle tyre, having
• a tread (2) with a tread surface and a shoulder-side circumferential groove (3) running in encircling fashion around the circumference of the tyre,
• and having a carcass with a carcass ply having strength members, wherein the carcass ply has, in a cross section of the tyre, a carcass ply line (4) running through the central points of the strength members of the carcass ply, wherein said cross section is the cross section perpendicular to the circumferential direction U that the tyre (1) would have in the new state if it were mounted on a standard wheel rim conforming to E.T.R.T.O. without filling pressure, **characterized**
• **in that** a point R of the carcass ply line (4) defined by a projection of a centre (7) of the circumferential groove (3) perpendicularly onto the carcass ply line (4) has a first spacing d of at least 0.7 mm to a straight line (6) that connects two points A and B of the carcass ply line,
∘ wherein the centre (7) of the circumferential groove is determined in a lateral surface (8) applied to the tread surface radially from the outside,
∘ wherein the first spacing d is measured perpendicular to the straight line (6), and wherein the point R is arranged radially outside the straight line (6), and
∘ wherein the point R is arranged centrally between the points A and B as measured along the carcass ply line (4) and has an equal second spacing D to each of the two points A and B, wherein the second spacing D is 1.0 to 2.0 times a width (9) of the circumferential groove (3) measured along the lateral surface (8).

2. Pneumatic vehicle tyre (1) according to Claim 1, **characterized in that** the first spacing d is 0.7 mm to 5.0 mm.

3. Pneumatic vehicle tyre (1) according to at least one of the preceding claims, **characterized in that** the second spacing D is 10 mm to 40 mm.

4. Pneumatic vehicle tyre (1) according to at least one of the preceding claims, **characterized in that** the carcass ply line (4) in the entire region between the points A and B is arranged so as to have a curvature (10) facing a tyre interior space (13).

5. Pneumatic vehicle tyre (1) according to at least one of the preceding claims, **characterized in that** the carcass ply line (4) axially inside of the points A and B is arranged so as to have a curvature (11) facing a tyre exterior space (14).

6. Pneumatic vehicle tyre (1) according to at least one of the preceding claims, **characterized in that** both axial halves of the tyre are formed in this way.

7. Pneumatic vehicle tyre (1) according to at least one of the preceding claims, **characterized in that** the strength members of the carcass ply (4) in a sidewall of the tyre form an angle of at most 10°, preferably of at most 5°, particularly preferably of at most 3°, with the radial direction rR.

8. Pneumatic vehicle tyre (1) according to at least one of the preceding claims, **characterized in that** the circumferential groove (3) is the axially outermost circumferential groove having a third spacing of at least 20 mm from a tread surface edge measured along the axial direction aR.

9. Pneumatic vehicle tyre (1) according to at least one of the preceding claims, **characterized in that** the tyre has a nominal aspect ratio of 45% to 80%.

10. Pneumatic vehicle tyre (1) according to at least one of the preceding claims, **characterized in that** the tyre is a utility vehicle tyre, preferably a lorry tyre.

## Revendications

1. Pneumatique (1) pour véhicule, en particulier pneumatique pour véhicule utilitaire, présentant
- une bande de roulement (2) avec une surface de roulement et une rainure circonférentielle (3) du côté de l'épaulement, s'étendant sur la circonférence du pneu,
- et présentant une carcasse avec une couche de carcasse présentant des supports de résistance, la couche de carcasse présentant, dans une section transversale du pneumatique, une ligne de couche de carcasse (4) passant par les points centraux des supports de résistance de la couche de carcasse ; il s'agit de la section transversale qui est perpendiculaire à la direction circonférentielle U que présenterait le pneumatique (1) à l'état neuf s'il était monté sur une jante normalisée selon l'E.T.R.T.O. sans pression de gonflage,
**caractérisé**
- **en ce qu'**un point R de la ligne de couche de carcasse (4), donné par une projection d'un centre (7) de la rainure circonférentielle (3) perpendiculaire à la ligne de couche de carcasse (4), présente une première distance d d'au moins 0,7mm par rapport à une droite (6) reliant deux points A et B de la ligne de couche de carcasse,
∘ le centre (7) de la rainure circonférentielle étant déterminé dans une surface d'enveloppe (8) reposant sur la surface de roulement depuis l'extérieur dans la direction radiale,
∘ la première distance d étant mesurée perpendiculairement à la droite (6) et le point R étant situé radialement à l'extérieur de la droite (6), et
∘ le point R, mesuré le long de la ligne de couche de carcasse (4), étant situé au milieu entre les points A et B et présentant une deuxième distance D égale par rapport à chacun des deux points A et B, la deuxième distance D étant de 1,0 à 2,0 fois une largeur (9) de la rainure circonférentielle (3), mesurée le long de la surface d'enveloppe (8).

2. Pneumatique (1) pour véhicule selon la revendication 1, **caractérisé en ce que** la première distance d est comprise entre 0,7mm et 5,0mm.

3. Pneumatique (1) pour véhicule selon au moins une des revendications précédentes, **caractérisé en ce que** la deuxième distance D est comprise entre 10mm et 40mm.

4. Pneumatique (1) pour véhicule selon au moins une des revendications précédentes, **caractérisé en ce que** la ligne de couche de carcasse (4) est située dans toute la zone comprise entre les points A et B en présentant une courbure (10) tournée vers un espace intérieur du pneumatique (13).

5. Pneumatique (1) pour véhicule selon au moins une des revendications précédentes, **caractérisé en ce que** la ligne de couche de carcasse (4) est située axialement à l'intérieur des points A et B en présentant une courbure (11) orientée vers un espace extérieur de pneumatique (14).

6. Pneumatique (1) pour véhicule selon au moins une des revendications précédentes, **caractérisé en ce que** les deux moitiés axiales du pneumatique sont conçues de cette manière.

7. Pneumatique (1) pour véhicule selon au moins une des revendications précédentes, **caractérisé en ce que** les supports de résistance de la couche de carcasse (4) forment, dans une paroi de flanc du pneumatique, un angle de 10° maximum, de préférence de 5° maximum, de manière particulièrement préférée de 3° maximum, avec la direction radiale rR.

8. Pneumatique (1) pour véhicule selon au moins une des revendications précédentes, **caractérisé en ce que** la rainure circonférentielle (3) est la rainure circonférentielle axialement la plus extérieure qui se trouve à une troisième distance d'au moins 20mm d'un bord de la bande de roulement, mesurée le long de la direction axiale aR.

9. Pneumatique (1) pour véhicule selon au moins une des revendications précédentes, **caractérisé en ce que** le pneumatique a un rapport nominal d'aspect compris entre 45% et 80%.

10. Pneumatique (1) pour véhicule selon au moins une des revendications précédentes, **caractérisé en ce que** le pneumatique est un pneumatique pour véhicule utilitaire, de préférence un pneumatique pour camion.
